# FASCICULE DE BREVET EUROPEEN

(11) **EP 1 623 820 B1**
(45) Date de publication et mention de la délivrance du brevet: **04.04.2007**
(21) Numéro de dépôt: 05016500.0
(22) Date de dépôt: 29.07.2005
(51) Int. Cl.: B29D 30/32

(54) **Dispositif d'enroulage d'un manchon cylindrique autour d'un anneau torique**
Vorrichtung zum Aufwickeln einer zylindrischen Hülse um einen O-Ring
Device for winding a cylindrical sleeve around an o-ring

(30) Priorité: 02.08.2004 FR 0408556
(43) Date de publication de la demande: 08.02.2006
(73) Titulaire: Société de Technologie Michelin, 63000 Clermont-Ferrand (FR); MICHELIN Recherche et Technique S.A., 1763 Granges-Paccot (CH)
(72) Inventeur: Ravat, Stéphane, 63100 Clermont-Ferrand (FR)
(74) Mandataire: Bauvir, Jacques

(56) Documents cités:
- DE-B- 1 268 372
- FR-A- 1 485 919
- FR-A- 1 490 230
- US-A1- 2002 007 917
- US-A1- 2003 037 856

## Description

L'invention concerne la fabrication des pneumatiques, et plus particulièrement un procédé et un dispositif de fabrication d'ébauches de pneumatiques comprenant des bourrelets particuliers.

Un pneumatique comprend usuellement des bourrelets prolongés par des flancs, ces derniers étant réunis par une couronne sommet elle même surmontée radialement à l'extérieur par une bande de roulement.

Ce type de pneumatique comprend une armature de carcasse s'étendant dans les flancs et ancrée dans les bourrelets, ladite armature de carcasse étant formée par au moins un empilement de renforts sensiblement parallèles les uns aux autres et enrobés dans au moins une composition de caoutchouc. Par empilement, on entend soit une nappe formée préalablement par calandrage de renforts entre deux couches de mélange de caoutchouc soit un composite formé d'une pluralité de renforts enrobés dans un mélange de caoutchouc. Les renforts peuvent être constitués par des fils ou câblés textiles ou métalliques.

Les bourrelets du pneumatique, destinés à être en appui sur la jante de montage dudit pneumatique, comprennent un anneau de renforcement du bourrelet disposé de façon concentrique à l'axe de rotation du pneumatique. Cet anneau de renforcement sert à l'ancrage de l'armature de carcasse. Il est en général formé d'une tringle enrobée de mélange de caoutchouc pour former une structure composite de section ronde. Une tringle est un corps formé d'un ou plusieurs renforts disposés de manière à conférer à ladite structure une rigidité d'extension circonférentielle suffisante pour reprendre les efforts créés dans l'armature de carcasse par le gonflage du pneumatique. Ladite tringle peut être de section transversale ronde ou non.

Que la tringle soit de section ronde ou non, il est usuel d'enrober cette tringle avec au moins un mélange de caoutchouc de façon à obtenir un anneau torique de section ronde.

Dans les pneumatiques les plus courants, l'armature de carcasse est ancrée sur chaque anneau de renforcement du bourrelet par couplage partiel autour dudit anneau pour former un retournement se prolongeant radialement vers l'extérieur et couplé avec l'armature de carcasse par au moins un mélange de caoutchouc.

La structure ainsi constituée (armature de carcasse, retournement et mélange de couplage) possède une rigidité importante à la flexion. Toutefois cette structure présente une sensibilité à la cassure à l'extrémité du retournement compte tenu de la position de ladite extrémité dans une région de plus ou moins forte flexion.

Pour réduire cette sensibilité, on a cherché à mettre l'extrémité de l'armature de carcasse hors de la zone de flexion, en la mettant dans le flanc du pneumatique voire sous le sommet.

C'est également la raison pour laquelle il a été proposé de développer des structures de bourrelet de pneumatique n'ayant pas d'extrémité de retournement de l'armature de carcasse dans les zones de flexion (ou plus généralement dans les zones de mouvement) du pneumatique.

Dans ce type de solution, le retournement de l'armature de carcasse entoure partiellement ou complètement l'anneau de renforcement du bourrelet.

Le document EP 1 066 992 décrit une architecture dans laquelle l'extrémité du retournement de l'armature de carcasse entoure partiellement l'anneau de renforcement du bourrelet de manière à ce que son extrémité soit située radialement à l'extérieur dudit anneau de renforcement.

Un autre type de construction de ces bourrelets est caractérisée par le fait que l'armature de carcasse est enroulée autour de l'anneau de renforcement du bourrelet de manière à ce que l'extrémité de ladite armature soit engagée entre l'anneau de renforcement du bourrelet et l'armature de carcasse elle-même pour faire au moins un tour complet dudit anneau de renforcement du bourrelet. Cet arrangement particulier a également pour avantage d'optimiser l'ancrage mécanique de l'armature de carcasse sur l'anneau de renforcement du bourrelet.

Toutefois la réalisation de ces structures est délicate en raison de la difficulté à faire prendre aux renforts de l'armature de carcasse des courbures prononcées en raison de leur élasticité de rappel couramment décrite sous le vocable de "nervosité".

L'objet de l'invention concerne
- un dispositif permettant de réaliser industriellement ce type de pneumatique,
- les éléments de procédé liés à la mise en oeuvre de ce dispositif.

L'art antérieur concernant un procédé susceptible de réaliser un pneumatique proche du type décrit ci-dessus est divulgué à titre d'exemple dans la publication EP 1 024 033. Ce document fait état de la possibilité d'engager l'extrémité du manchon cylindrique entre l'anneau de renforcement du bourrelet et l'armature de carcasse. Ce moyen reste limité par le fait que, au cours de la mise en oeuvre de ce procédé, il n'est pas possible de faire faire un tour complet à ladite armature de carcasse autour de l'anneau de renforcement du bourrelet ; le nombre de tours étant compté sur le diamètre intérieur dudit anneau de renforcement du bourrelet comme le nombre de passages dudit empilement d'armature de carcasse diminué d'une unité.

Par ailleurs, et de manière à combattre la "nervosité" des renforts lorsque ceux-ci sont constitués de câbles métalliques, EP 1 024 033 propose de casser ladite armature par application d'un rouletage appuyé sur les zones de l'armature destinées à subir la plus forte courbure. On cherche néanmoins à éviter une telle opération en raison des déformations plastiques localisées qu'elle fait subir aux renforts métalliques, lesquelles peuvent être préjudiciables à leur endurance.

L'invention a pour objet un dispositif et un procédé de mise en oeuvre dudit dispositif, destinés à la fabrication de pneumatique comportant des bourrelets dans l'un au moins desquels, l'armature de carcasse est enroulée autour de l'anneau de renforcement du bourrelet, de manière à ce que l'extrémité de ladite armature de carcasse soit engagée entre l'anneau de renforcement du bourrelet et l'armature de carcasse elle-même pour faire au moins un tour complet de dudit anneau de renforcement du bourrelet.

Plus généralement l'armature de carcasse pourra être assimilée à un manchon cylindrique, et l'anneau de renforcement du bourrelet à un anneau torique.

Dans ces conditions l'invention concerne un dispositif d'enroulement d'une extrémité d'un manchon cylindrique d'axe XX', autour d'un anneau torique de diamètre intérieur sensiblement égal à celui du manchon cylindrique, de telle manière que l'extrémité du dit manchon cylindrique soit engagée entre l'anneau torique et le manchon cylindrique lui-même pour faire au moins un tour complet autour de la section radiale sensiblement circulaire dudit anneau torique

Ce dispositif comprend une toile d'enroulement, également formée par un manchon glissant librement dans la direction axiale sur la surface extérieure d'un ensemble concentrique de têtes d'enroulage présentant un profil extérieur comprenant un dos constituant une surface sensiblement cylindrique d'axe XX', une surface annulaire avant convexe d'axe XX', raccordée à la surface précédente, et une surface annulaire concave d'axe XX' située en arrière de la surface annulaire convexe et raccordée à cette dernière.

Les deux extrémités du manchon que forme la toile d'enroulement sont fixées à la périphérie de deux plateaux d'ancrage circulaires et concentriques d'axe XX', et situés de part et d'autre des têtes d'enroulage.

Lorsqu'elle est plaquée contre la surface constituée par l'ensemble des têtes d'enroulage, la toile d'enroulement réalise des boucles en forme de S. Cette forme particulière de la surface des têtes d'enroulage permet à la toile d'enroulement de former une boucle constituant un logement annulaire destiné à enserrer l'anneau torique et le manchon cylindrique.

Selon ce dispositif, l'enroulement du manchon cylindrique autour de l'anneau torique est entraîné par le mouvement axial relatif par rapport aux têtes d'enroulage, de la toile d'enroulement enserrant l'anneau torique et le manchon cylindrique sur une partie de la circonférence de l'ensemble formé dudit anneau torique et dudit manchon cylindrique enroulé autour de ce dernier.

Le mouvement relatif de la toile d'enroulement autour de l'anneau torique est provoqué par le déplacement axial des têtes d'enroulage entre les dits plateaux d'ancrage lequel déplacement entraîne dans le même mouvement axial l'ensemble formé dudit anneau torique et dudit manchon cylindrique enroulé autour de ce dernier. Ce mouvement pourrait tout aussi bien être la résultante du déplacement axial des plateaux d'ancrage par rapport aux têtes d'enroulage.

Un tel dispositif permet de réaliser les ébauches de pneumatiques comportant des bourrelets dans l'un au moins desquels, l'armature de carcasse est enroulée autour de l'anneau de renforcement du bourrelet, de manière à ce que l'extrémité de ladite armature de carcasse soit engagée entre l'anneau de renforcement du bourrelet et l'armature de carcasse elle-même pour faire au moins un tour complet de dudit anneau de renforcement du bourrelet sans qu'il soit nécessaire de déformer préalablement l'armature de carcasse.

La description qui va suivre s'attachera à décrire un mode particulier de réalisation d'un dispositif conforme à l'invention ainsi que le procédé de mise en oeuvre du dispositif objet de l'invention.

Les caractéristiques de l'invention ressortent de la description faite ci-après en référence aux schémas et dessins qui montrent, à titre non limitatif, une forme de réalisation d'un dispositif conforme à l'invention et dans lesquels :
- les figures 1 et 2 représentent des vues en coupe schématique de pneumatique présentant des structures qu'il est possible de réaliser avec le dispositif objet de l'invention,
- les figures 3 et 4 représentent des schémas en coupe décrivant le principe de fonctionnement du dispositif objet de l'invention,
- la figure 5 représente une vue en coupe d'un dispositif conforme à l'invention,
- les figures 6 à 11 représentent les principales étapes du procédé mettant en oeuvre le dispositif objet de l'invention.

Les éléments identiques ou ayant une fonction similaire porteront le même numéro ou la même lettre de référence.

L'axe du dispositif est repéré selon XX' et les repères considérés ou les mouvements réalisés selon cette direction seront qualifiés de axial. Une direction radiale est une direction perpendiculaire à l'axe XX', et seront qualifiés de radial les repères considérés ou les mouvements réalisés selon cette direction.

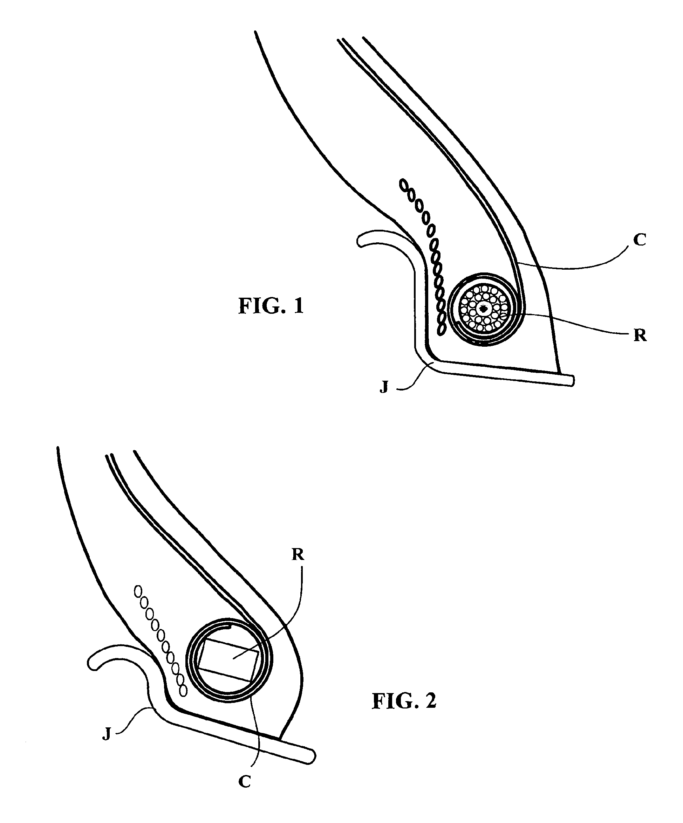

Les figures 1 et 2 montrent des vues en coupe schématique de pneumatiques, positionnés sur une jante J, dans lesquels l'armature de carcasse est enroulée autour de l'anneau de renforcement du bourrelet R de manière à ce que l'extrémité de l'armature de carcasse C soit enroulée entre l'anneau torique de renforcement du bourrelet R et l'armature de carcasse C elle-même pour faire au moins un tour complet dudit anneau de renforcement du bourrelet. Il va de soi que le procédé permet également de réaliser des pneumatiques dans lesquels l'armature de carcasse C fait moins d'un tour complet autour de l'anneau de renforcement du bourrelet R.

L'anneau torique de renforcement du bourrelet R est lui-même formé d'au moins une tringle (c'est-à-dire au moins un fil ou un câble ou un assemblage de fils ou de câbles formant une structure continue circonférentielle et ayant une grande rigidité d'extension) de section méridienne pouvant être, notamment mais pas exclusivement, circulaire ou bien rectangulaire.

Ainsi, la figure 1 montre une coupe d'un bourrelet de pneumatique dont l'anneau de renforcement du bourrelet est une tringle de section circulaire ; La figure 2 montre une coupe d'un pneumatique avec une tringle de section sensiblement rectangulaire et enrobée dans un profilé ayant une forme externe sensiblement circulaire. Pour des facilités de mise en oeuvre du procédé, on préfèrera néanmoins le choix d'une tringle de section circulaire.

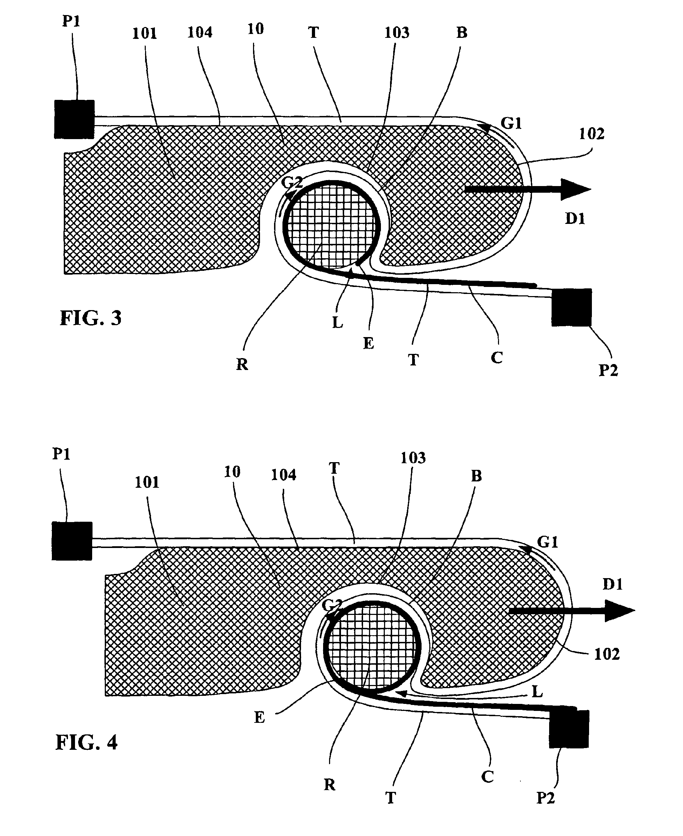

Le principe de fonctionnement d'un dispositif conforme à l'invention est visualisé sur les figures 3 et 4 dans lequel la toile d'enroulement T, représentée en section méridienne, est fixée par ses deux extrémités en P1 et P2 situés sur la périphérie des plateaux d'ancrage (non représentés).

La tête d'enroulage 10 est positionnée axialement entre P1 et P2 et peut se déplacer axialement dans la direction D1. Elle est délimitée par des surfaces externes qui comprennent :
- un dos 104 sensiblement rectiligne et formant une surface cylindrique d'axe XX',
- une partie convexe 102 raccordée à la surface précédente, formant une surface annulaire d'axe XX', et située à l'avant de la tête d'enroulage axialement la plus proche de P2,
- et une partie concave 103, formant une surface annulaire concave d'axe XX', raccordée à la surface annulaire convexe et située en arrière de cette dernière.

L'axe XX' n'est pas représenté sur les figures 3 et 4 pour des raisons d'échelle et de clarté mais apparaît clairement sur les figures suivantes.

Le corps 101 de la tête d'enroulage est destiné à être relié aux mécanismes (non représentés) commandant les mouvements de la tête d'enroulage 10.

La toile d'enroulement T peut glisser librement sur le dos 104 , la partie convexe 102 et la partie concave 103 de la tête d'enroulage lorsqu'elle est mise en contact avec lesdites surfaces. Dans cette configuration la toile d'enroulement T prend une forme en S et forme une boucle B enfermant un logement annulaire L.

Pour réaliser l'enroulage du manchon cylindrique C autour de l'anneau torique R il convient d'introduire ces deux constituants dans ledit logement annulaire L.

En déplaçant la tête d'enroulage 10 et l'ensemble formé par l'anneau torique R et le manchon cylindrique C dans la direction axiale D1 on crée un glissement relatif de la toile d'enroulement T le long de la surface de la tête d'enroulage, suivant la direction G1. La toile d'enroulage T effectue alors un mouvement circulaire autour de l'anneau torique R, qui a pour effet d'entraîner l'enroulement de l'extrémité E du manchon cylindrique C autour dudit anneau torique R.

Il est possible d'ajuster précisément le nombre de tours d'enroulement du manchon cylindrique autour de l'anneau torique du bourrelet en déterminant en conséquence la longueur du déplacement axial de la tête d'enroulage.

On observera que l'enroulement du manchon cylindrique C autour de l'anneau torique R se fait par glissement de la surface du manchon cylindrique C sur la surface externe de l'anneau torique R. A cet effet il est indispensable de réduire autant que faire se peut les frottements entre ces deux surfaces par tout moyen approprié.

Ainsi, à titre d'exemple, on peut prévoir l'usage de poudre de stéarate ou encore entourer l'anneau torique d'un filament métallique ou textile disposé en spirale, ou bien encore faire usage d'une gaine en matériau thermoplastique disposée autour de l'anneau torique.
Dans ce dernier cas, et s'il s'agit d'un pneumatique, on s'arrangera pour que ce matériau thermoplastique puisse s'intégrer dans la structure du bourrelet et avec les profilés caoutchoutiques adjacents au moment de l'étape de vulcanisation.

Par ailleurs, on peut encore faciliter l'enroulement du manchon cylindrique et l'engagement de son extrémité E sous l'anneau torique, en prolongeant axialement vers l'extérieur l'extrémité du manchon cylindrique principal par une portion de manchon cylindrique réalisée dans un matériau présentant une moins grande "nervosité" que le matériau composant le manchon cylindrique principal proprement dit. Ce prolongement est utilisé pour entraîner l'extrémité du manchon cylindrique principal en formant une zone d'amorçage facilitant ainsi l'enroulage du manchon cylindrique principal C autour de l'anneau torique R. Il est préférentiellement composé d'un matériau de renfort souple, c'est-à-dire présentant une grande flexibilité ou souplesse à la courbure.

On notera également que, pour assurer un entraînement satisfaisant par la toile d'enroulement T du manchon cylindrique C autour de l'anneau torique R, il est préférable de mettre la toile T en tension en appliquant des forces axiales de sens opposés sur les plateaux d'ancrage supportant le points d'ancrage P1 et P2.

Toutefois, cette mise en tension de la toile d'enroulement T pourrait avoir pour conséquence de provoquer la mise en compression radiale de l'anneau torique et, dans certains cas, la sortie du logement annulaire L de l'ensemble formé par l'anneau torique R et du manchon cylindrique C. Pour éviter ce phénomène il convient de concevoir les formes respectives des surfaces convexe 102 et concave 103 de telle manière que la toile puisse entourer l'ensemble formé par l'anneau torique R et le manchon cylindrique C sur au moins la moitié de sa circonférence ; Le fonctionnement du dispositif étant d'autant plus facile à mettre en oeuvre que la toile d'enroulement T entoure cet ensemble sur la plus large part de la circonférence dudit ensemble.

Le diamètre des plateaux d'ancrage supportant les points d'ancrage P1 et P2 des extrémités de la toile d'enroulement T doit également être ajustée de telle manière que les points d'ancrage P1 soient disposés sensiblement au même rayon que le dos 104, et que les points d'ancrage P2 soient disposés sensiblement au même rayon que le rayon intérieur de l'anneau torique R. Cet arrangement ayant pour but de maintenir sensiblement constante la distance axiale entre les points d'ancrage P1 et P2 pendant le déplacement axial de la tête d'enroulage 10. En pratique il convient de choisir un plateau supportant les points d'ancrage P2 d'un rayon légèrement inférieur à celui du rayon intérieur de l'anneau torique, de manière à permettre l'introduction axiale de l'ensemble formé du manchon cylindrique C et de l'anneau torique R dans le logement L.

La toile d'enroulement T est formée de matériaux lui conférant une élasticité axiale appropriée, et en pratique aussi faible que possible, et une élasticité circonférentielle lui permettant de passer d'un diamètre égal au diamètre intérieur de l'anneau torique R au diamètre du cylindre formé par la surface des dos 104 sans subir de dégradation. En effet il convient que la toile d'enroulement puisse suivre sans faire de plis le profil axial de la tête d'enroulage 10 lors du déplacement axial de cette dernière.

On remarquera que le dispositif D décrit ci-dessus permet de réaliser l'enroulement d'un manchon cylindrique C de diamètre sensiblement égal au diamètre intérieur d'un anneau torique R. Dans ces conditions les têtes d'enroulage 10, 10', sont disposées de manière à ce que la surface cylindrique formant le dos (104) soit située sur la partie radialement la plus éloignée de l'axe XX' des dites têtes d'enroulage 10, 10'.

Il est toutefois tout à fait possible d'envisager de réaliser l'enroulement d'un manchon cylindrique C autour d'un anneau torique R tel que le diamètre du manchon cylindrique soit sensiblement égal au diamètre extérieur de l'anneau torique. Il convient alors d'inverser l'orientation des têtes d'enroulage et de les configurer de manière à ce que la surface cylindrique formant le dos 104 soit située sur la partie radialement la plus rapprochée de l'axe XX' des dites têtes d'enroulage 10, 10'.

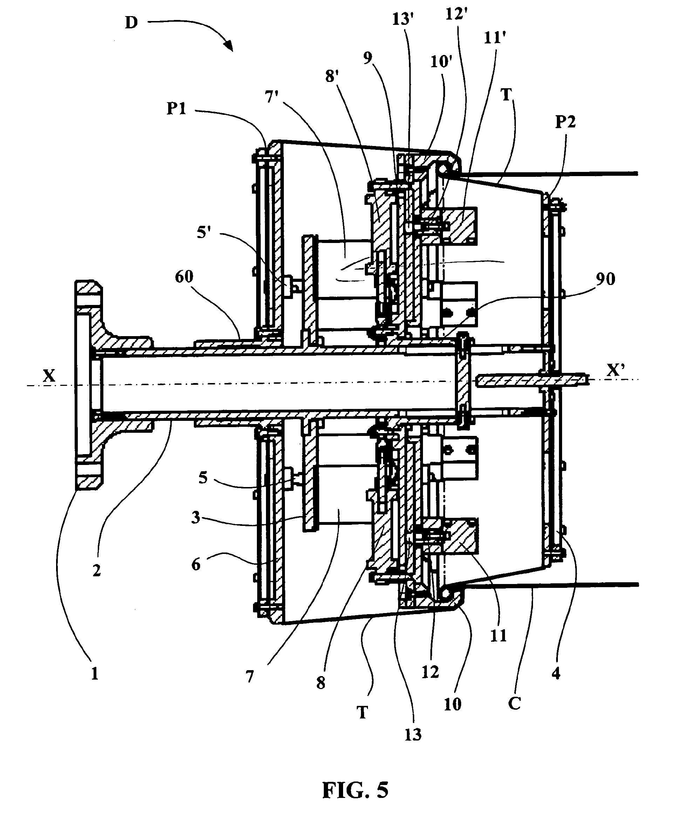

La figure 5 permet de visualiser une vue en coupe d'un dispositif D conforme à l'invention.

Un arbre 2, d'axe XX', relié par un flasque 1 à un bâti (non représenté) porte un ensemble distincts de plateaux circulaires et centrés sur l'axe XX'.

Le dispositif D comporte deux plateaux fixes 3 et 4, et deux plateaux mobiles 6 et 9. En partant dans la direction axiale de la flasque 1 sont disposés successivement le plateau mobile 6, puis le plateau fixe 3, le plateau mobile 9 et enfin le plateau fixe 4 axialement le plus éloigné de la flasque 1. Les plateaux mobiles 6 et 9 coulissent sur l'arbre 2 par l'intermédiaire de bagues coulissantes, respectivement 60 et 90.

La toile d'enroulement T forme un manchon dont les deux extrémités axiales P1 et P2 sont fixées à la périphérie des deux plateaux d'ancrage circulaires 4 et 6 dont les diamètres correspondent sensiblement respectivement au diamètre intérieur de l'anneau torique R et au diamètre du cylindre formé par les dos 104 des têtes d'enroulage.

Le plateau fixe 3 porte un premier ensemble de vérins pneumatiques 5, 5' autorisant le déplacement axial du plateau mobile 6. Ce premier ensemble de vérin a pour objet de maintenir une tension axiale constante de la toile d'enroulement T tendue entre les plateaux 6 et 4.

Un deuxième ensemble de vérins 7, 7' est disposé sur le plateau fixe 3 et autorise le déplacement axial du plateau mobile 9.

Le plateau mobile 9 porte à sa périphérie l'ensemble des têtes d'enroulage 10, 10' constituées d'un ensemble de fragments circonférentiels des surfaces annulaires 104, 102 et 103 telles que décrites précédemment.

Les têtes d'enroulage 10, 10' sont mobiles radialement entre deux positions comprenant une première position dite ouverte de manière à autoriser l'introduction et l'extraction du manchon cylindrique C et de l'anneau torique R, et une deuxième position dite fermée dans laquelle les parties concaves sont disposées de manière à emprisonner dans le logement annulaire L l'ensemble formé par le manchon cylindrique C et l'anneau torique R.

Le nombre de têtes d'enroulage, au minimum supérieur ou égal à 2, est déterminé par l'amplitude nécessaire au mouvement radial entre les positions ouvertes et fermées. En pratique il semble qu'il soit suffisant de constituer les surfaces annulaires à partir de trois fragments circonférentiels.

On notera qu'en position fermée la forme de la surface annulaire convexe est adaptée pour recevoir la toile d'enroulement T, et l'anneau torique R autour duquel s'enroule le manchon cylindrique C. Il convient de prévoir une forme d'un volume intérieur suffisant pour admettre les effets liés à l'augmentation de la taille de cet ensemble lorsque le nombre de tours d'enroulement du manchon cylindrique C autour de l'anneau torique R s'accroît.

Le mouvement radial des têtes d'enroulage 10, 10' est commandé par un ensemble de vérins pneumatiques 8, 8' disposés sur le plateau 9.

De manière à empêcher tout mouvement radial des têtes d'enroulage 10, 10' en position fermée, un dispositif de verrouillage est également disposé sur le plateau 9. Ce dispositif de verrouillage comprend un ensemble de vérins pneumatiques 11, 11' commandant le déplacement axial d'un ensemble de doigts de verrouillage 12, 12' pénétrant dans des lumières 13, 13' alignées axialement avec les doigts de verrouillage 12, 12' lorsque les têtes d'enroulage sont en position fermée.

Un automatisme permet de piloter les mouvements de ces différents organes dont on comprendra aisément les fonctionnalités en détaillant les différentes phases du procédé de mise en oeuvre du dispositif D décrit ci-dessus.

Une première partie du procédé consiste à réaliser le manchon cylindrique.

Dans le cas d'un pneumatique ce manchon peut être composé, à titre non limitatif, d'une armature de carcasse et des anneaux de renforcement du bourrelet. Cette opération s'effectue sur un tambour de confection classique et connu de l'homme de l'art et consiste à:
- déposer sur la surface cylindrique d'un tambour de confection une armature de carcasse C sous forme d'une nappe ayant deux extrémités axiales et comprenant au moins un empilement formé d'une pluralité de renforts enrobés dans une composition de caoutchouc,
- enfiler de façon concentrique à l'armature de carcasse C sur le tambour de confection, des anneaux torique de renforcement du bourrelet R en les plaçant à des distances appropriées par rapport aux extrémités E du manchon cylindrique formé par l'armature de carcasse C ; la partie du manchon cylindrique située axialement entre lesdits anneaux torique de renforcement du bourrelet R constituant la partie médiane dudit manchon.
- extraire le manchon cylindrique ainsi réalisé du tambour de confection.

Les armatures de carcasse peuvent indifféremment être constituées de renforts faisant un angle inférieur ou égal à 90° avec la direction circonférentielle.

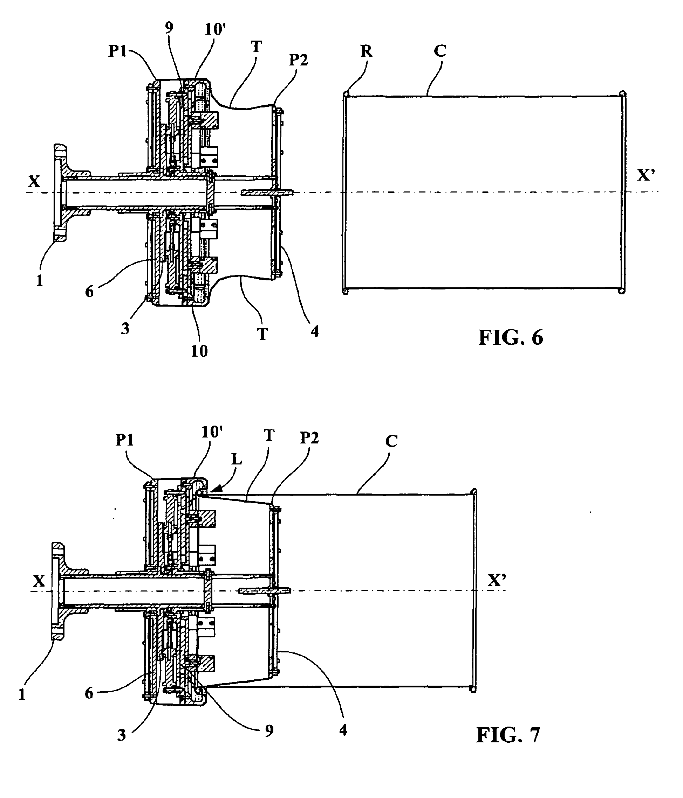

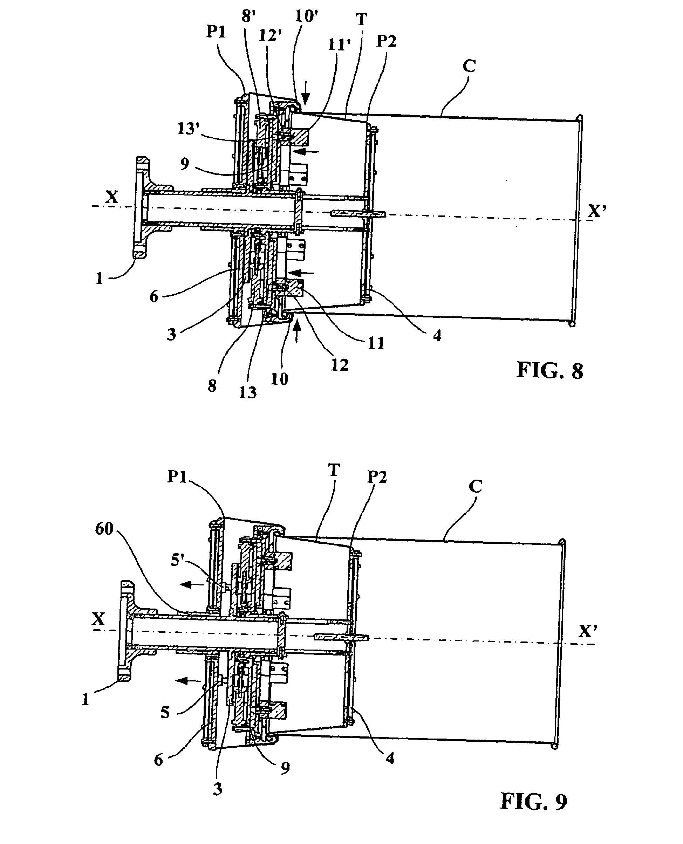

La deuxième partie du processus s'effectue à l'aide du dispositif d'enroulement D tel que décrit précédemment, et comprend les étapes suivantes :
- approcher et introduire l'anneau torique R et une des deux extrémités E du manchon cylindrique C dans le dispositif d'enroulement D en disposant l'ensemble à l'intérieur du logement annulaire L formé par la toile d'enroulement T, tel que représenté schématiquement sur les figures 6 et 7,
- abaisser radialement l'ensemble des têtes d'enroulage 10, 10' en actionnant les vérins 8, 8' (voir figure 8) de manière à ce que la toile d'enroulement T entoure l'ensemble formé par l'anneau torique R et le manchon cylindrique C sur plus de la moitié de la circonférence dudit ensemble, et que les têtes d'enroulage forment des surfaces annulaires cylindriques 104, convexes 102 et concaves 103 sensiblement continues,
- verrouiller les têtes d'enroulage 10, 10', en actionnant les vérins 11, 11', comme cela est représenté sur la figure 8, les flèches disposées à coté de chacun de ces organes permettant de visualiser la direction des mouvements opérés,
- mettre la toile d'enroulement T en tension, en actionnant les vérins 5, 5' de manière à déplacer axialement le plateau 6 sur la périphérie P1 duquel est fixé la toile d'enroulement T comme cela est représenté sur la figure 9.

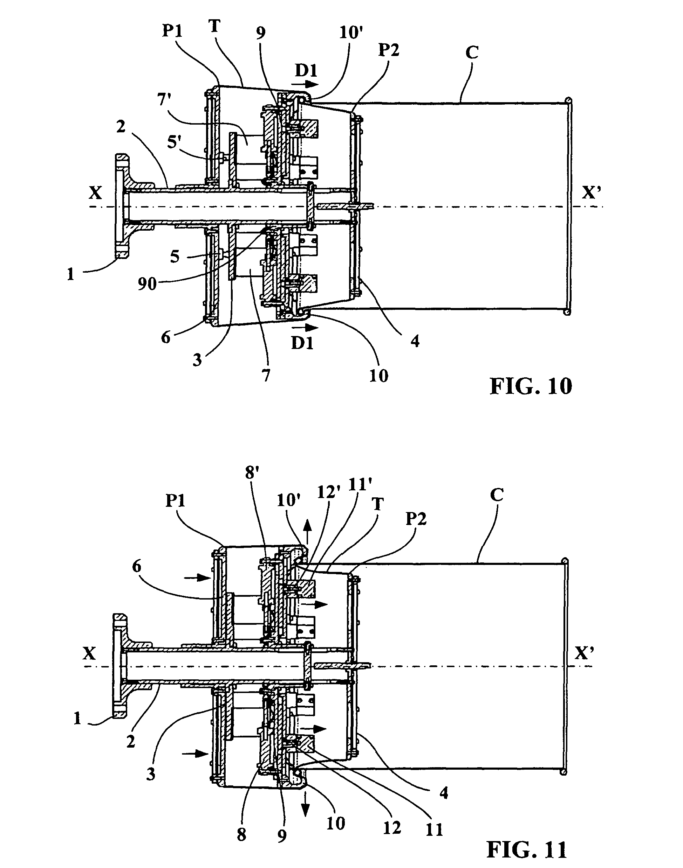

L'opération d'enroulement proprement dite s'effectue ensuite et consiste à :
- déplacer axialement (voir la figure 10) dans une direction axiale D1 dirigée vers la partie médiane du manchon cylindrique, l'ensemble des têtes d'enroulage 10, 10', en déplaçant axialement le plateau 9 sous l'action des vérins 7, 7', de façon à ce que le mouvement relatif de la toile d'enroulement T entourant l'anneau torique R et le manchon cylindrique C par rapport à la surface annulaire concave 103, entraîne l'enroulement de l'extrémité E du manchon cylindrique C autour de l'anneau torique R. La longueur du manchon cylindrique C enroulée autour de l'anneau torique R dépend directement de l'amplitude du déplacement axial des têtes d'enroulage 10, 10'. L'extrémité E dudit manchon cylindrique peut être engagée entre l'anneau torique R et le manchon cylindrique C lui-même pour faire au moins un tour complet dudit manchon cylindrique C.

L'enroulage d'une première extrémité achevée il convient de :
- relâcher la tension de la toile d'enroulement T en actionnant les vérins 5, 5' et relever radialement l'ensemble des têtes d'enroulage 10, 10' en actionnant les vérins 8, 8' après avoir déverrouillé les doigts 12, 12' et actionné les vérins 11, 11' comme cela est représenté sur la figure 11,
- extraire le manchon cylindrique C enroulé autour de l'anneau torique R et introduire si nécessaire l'extrémité E du manchon axialement opposée dans le dispositif d'enroulement afin de lui faire subir les mêmes opérations.

Dans le cas d'une ébauche de pneumatique, il reste à achever ladite ébauche sur des moyens classiques de finition, et à procéder à la vulcanisation dans un moule de manière à obtenir un pneumatique ayant l'architecture désirée.

Les étapes de réalisation de l'enroulage, telles que décrites précédemment, font appel à plusieurs tambours pour la réalisation de l'ébauche de pneumatique afin de mieux caractériser les étapes liées à la réalisation de l'enroulage proprement dit consistant à mettre en oeuvre le dispositif conforme à l'invention. Mais il est tout à fait concevable d'intégrer ce dispositif sur des procédés existants en réalisant les adaptations nécessaires pour maintenir le manchon cylindrique comprenant l'armature de carcasse et les anneaux torique du bourrelet sur le tambour dit de confection et approcher le dispositif d'enroulement des extrémités du manchon pour procéder à l'opération d'enroulage.

## Revendications

1. Dispositif (D) d'enroulement d'une extrémité (E) d'un manchon cylindrique (C) d'axe XX', autour d'un anneau torique (R) de diamètre intérieur sensiblement égal à celui du manchon cylindrique (C), de telle manière que l'extrémité (E) du dit manchon cylindrique soit engagée entre l'anneau torique (R) et le manchon cylindrique (C) lui-même pour faire au moins un tour complet autour de la section radiale sensiblement circulaire dudit anneau torique (R) , dispositif **caractérisé en ce qu**'il comprend une toile d'enroulement (T) formée également par un manchon glissant librement dans la direction axiale sur la surface extérieure d'un ensemble concentrique de têtes d'enroulage (10, 10') présentant un profil extérieur comprenant un dos (104) constituant une surface sensiblement cylindrique d'axe XX', une surface annulaire avant convexe (102) d'axe XX', raccordée à la surface précédente, et une surface annulaire concave (103) d'axe XX' située en arrière de la surface annulaire convexe (102) et raccordée à cette dernière de manière à ce que la toile d'enroulement (T) réalise des boucles en forme de S, lorsque ladite toile d'enroulement (T) suit sensiblement le profil radial de la surface annulaire convexe (102) et de la surface annulaire concave (103) des dites têtes d'enroulage (10, 10').

2. Dispositif selon la revendication 1 dans lequel une des boucles (B) en forme de S réalisée par la toile d'enroulement (T) forme un logement annulaire (L) destiné à enserrer l'anneau torique (R) et l'extrémité (E) du manchon cylindrique (C).

3. Dispositif selon la revendication 2 dans lequel la toile d'enroulement (T) est sensiblement élastique dans la direction circonférentielle et sensiblement non élastique dans la direction axiale XX'.

4. Dispositif selon la revendication 2 dans lequel les têtes d'enroulage (10, 10') sont disposées de manière à ce que la surface cylindrique formant le dos (104) soit située sur la partie radialement la plus éloignée de l'axe XX' des dites têtes d'enroulage (10, 10').

5. Dispositif selon la revendication 2 dans lequel la toile d'enroulement (T) entoure l'ensemble formé par l'anneau torique (R) et le manchon cylindrique (C) enroulé autour de ce dernier sur plus de la moitié de la circonférence dudit ensemble.

6. Dispositif selon la revendication 2 dans lequel les deux extrémités (P1, P2) du manchon (C) formé par la toile d'enroulement (T) sont fixées à la périphérie de deux plateaux d'ancrage circulaires (4, 6) concentriques et disposés sur un arbre (2) d'axe XX' de part et d'autre des têtes d'enroulage (10, 10').

7. Dispositif selon la revendication 6 dans lequel les plateaux d'ancrage (4, 6) sont dotés d'un mécanisme (5, 5') permettant de maintenir une tension constante de la toile d'enroulement (T) dans la direction axiale pendant l'opération d'enroulage proprement dite du manchon cylindrique (C) autour de l'anneau torique (R).

8. Dispositif selon la revendication 2 dans lequel l'enroulement du manchon cylindrique (C) autour de l'anneau torique (R) est entraîné par le mouvement relatif de la toile d'enroulement (T) circulant axialement à la surface des têtes d'enroulage (10, 10').

9. Dispositif selon la revendication 8 dans lequel le déplacement axial relatif de la toile d'enroulement (T) sur la surface des têtes d'enroulage (10, 10') est provoqué par le déplacement axial des dites têtes d'enroulage entre les plateaux d'ancrage (4, 6).

10. Dispositif selon la revendication 8 dans lequel le déplacement axial relatif de la toile d'enroulement (T) sur la surface des têtes d'enroulage (10, 10') est provoqué par le déplacement axial des plateaux d'ancrage (4, 6).

11. Dispositif selon la revendication 6 dans lequel les diamètres des plateaux d'ancrage (4, 6) sont ajustés de manière à ce que les points d'ancrage P1 soient disposés sensiblement au même rayon que le dos de la tête d'enroulage (104), et que les points d'ancrage P2 soient disposés sensiblement au même rayon que le rayon intérieur de l'anneau torique (R).

12. Dispositif selon la revendication 2 dans lequel le plateau support (9) comprend un mécanisme (8, 8') autorisant le déplacement radial des têtes d'enroulage (10, 10') facilitant l'introduction axiale de l'ensemble formé par l'anneau torique (R) et le manchon cylindrique (C) enroulé autour de ce dernier dans le logement annulaire (L).

13. Procédé d'enroulement d'une l'extrémité (E) d'un manchon cylindrique (C) d'axe XX', autour d'un anneau torique (R) de diamètre intérieur sensiblement égal à celui du manchon cylindrique (C), de telle manière que l'extrémité (E) du dit manchon cylindrique soit engagée entre l'anneau torique (R) et le manchon cylindrique (C) lui-même pour faire au moins un tour complet autour de la section radiale sensiblement circulaire dudit anneau torique (R), **caractérisé en ce que** l'enroulement de l'extrémité (E) dudit manchon cylindrique (C) autour de l'anneau torique (R) est entraîné par le mouvement d'une toile d'enroulement (T) enserrant une partie de la circonférence de l'ensemble formé de l'anneau torique (R) et du manchon cylindrique (C) entouré autour de ce dernier.

14. Procédé selon la revendication 13 comprenant les étapes suivantes :
- disposer en position ouverte un dispositif (D) comprenant une toile d'enroulement (T) formée par un manchon fixé par ses deux extrémités (P1, P2) sur deux plateaux d'ancrage (4, 6) de diamètre différents, ladite toile d'enroulement (T) glissant librement dans la direction axiale sur la surface extérieure d'un ensemble concentrique de têtes d'enroulage (10, 10') présentant un profil extérieur comprenant un dos (104) constituant une surface sensiblement cylindrique d'axe XX', une surface annulaire avant convexe (102) d'axe XX', raccordée à la surface précédente, et une surface annulaire concave (103) d'axe XX' située en arrière de la surface annulaire convexe (102) et raccordée à cette dernière, de manière à ce que la toile d'enroulement réalise des boucles (B) en forme de S lorsque ladite toile d'enroulement (T) suit sensiblement le profil radial des la surface des têtes d'enroulage (10, 10'), en relevant radialement les dites têtes d'enroulage (10, 10') à l'aide des moyens appropriés (8, 8'),
- introduire un anneau torique (R) et une des extrémités (E) du manchon cylindrique dans le logement annulaire (L) formé par la boucle (B) réalisée par la toile d'enroulement,
- abaisser radialement de manière concentrique l'ensemble des têtes d'enroulage de manière à ce que la toile d'enroulement (T) enserre l'ensemble formé par l'anneau torique (R) et le manchon cylindrique (C) sur plus de la moitié de la circonférence dudit ensemble,
- mettre la toile d'enroulement (T) en tension dans la direction axiale à l'aide des moyens appropriés (5, 5'),
- déplacer axialement dans une direction axiale D1 dirigée vers la partie médiane du manchon cylindrique (C) l'ensemble des têtes d'enroulage (10, 10') de façon à ce que le mouvement relatif de la toile d'enroulement (T) par rapport à la surface annulaire concave (103) entraîne l'enroulement de l'extrémité (E) du manchon cylindrique autour de l'anneau torique (R), de manière à ce que l'extrémité (E) soit engagée entre l'anneau torique (R) et ledit manchon cylindrique (C) lui-même pour faire au moins un tour complet autour dudit anneau torique (R),
- relâcher la tension de la toile d'enroulement (T) et relever radialement l'ensemble des têtes d'enroulage (10, 10'),
- extraire le manchon cylindrique (C) enroulée autour de l'anneau torique (R).

15. Procédé selon la revendication 13 dans lequel l'anneau torique (R) est constitué par une tringle torique de renforcement d'un bourrelet de pneumatique.

16. Procédé selon la revendication 13 dans lequel le manchon cylindrique (C) est constitué par l'armature de carcasse d'un pneumatique.

17. Procédé selon la revendication 13 dans lequel il est introduit un agent permettant de réduire les frottements au niveau de l'interface entre l'anneau torique (R) et le manchon cylindrique (C) de manière à permettre le glissement du manchon cylindrique (C) autour de l'anneau torique (R).

18. Procédé selon la revendication 17 dans lequel l'agent permettant de réduire les frottements est du stéarate.

19. Procédé selon la revendication 17 dans lequel l'agent permettant de réduire les frottements est constitué par une gaine en matériau thermoplastique préalablement enroulée autour de l'anneau torique (R).

20. Procédé selon la revendication 17 dans lequel l'agent permettant de réduire les frottements est constitué par un filament métallique ou textile préalablement enroulé autour de l'anneau (R).

## Claims

1. Device (D) for winding an end (E) of a cylindrical sleeve (C) of axis XX' around a toric ring (R) with an inside diameter substantially equal to that of the cylindrical sleeve (C), so that the end (E) of the said cylindrical sleeve is engaged between the toric ring (R) and the cylindrical sleeve (C) itself in order to make at least one complete turn around the substantially circular radial section of the said toric ring (R), a device **characterised in that** it comprises a winding fabric (T) also formed by a sleeve sliding freely in the axial direction on the external surface of the concentric set of winding heads (10, 10') having an external profile comprising a back (104) constituting a substantially cylindrical surface of axis XX', a convex front annular surface (102) of axis XX', connected to the preceding surface, and a concave annular surface (103) of axis XX' situated at the rear of the convex annular surface (102) and connected to this end so that the winding fabric (T) produces S-shaped loops, when the said winding fabric (T) substantially follows the radial profile of the convex annular surface (102) and of the concave annular surface (103) of the said winding heads (10, 10').

2. Device according to Claim 1, in which one of the S-shaped loops (B) produced by the winding fabric (T) forms an annular housing (L) intended to grip the toric ring (R) and the end (E) of the cylindrical sleeve (C).

3. Device according to Claim 2, in which the winding fabric (T) is substantially elastic in the circumferential direction and substantially non-elastic in the axial direction XX'.

4. Device according to Claim 2, in which the winding heads (10, 10') are disposed so that the cylindrical surface forming the back (104) is situated on the part of the said winding heads (10, 10') radially furthest away from the axis XX'.

5. Device according to Claim 2, in which the winding fabric (T) surrounds the assembly formed by the toric ring (R) and the cylindrical sleeve (C). wound around the latter over more than half of the circumference of the said assembly.

6. Device according to Claim 2, in which the two ends (P1, P2) of the sleeve (C) formed by the winding fabric (T) are fixed to the periphery of two concentric circular anchoring plates (4, 6) disposed on a shaft (2) of axis XX' on each side of the winding heads 10, 10'.

7. Device according to Claim 6, in which the anchoring plates (4, 6) are provided with a mechanism (5, 5') making it possible to maintain a constant tension on the winding fabric (T) in the axial direction during the winding operation proper of the cylindrical sleeve (C) around the toric ring (R).

8. Device according to Claim 2, in which the winding of the cylindrical sleeve (C) around the toric ring (R) is caused by the relative movement of the winding fabric (T) circulating axially to the surface of the winding heads (10, 10').

9. Device according to Claim 8, in which the relative axial movement of the winding fabric (T) on the surface of the winding heads (10, 10') is caused by the axial movement of the said winding heads between the anchoring plates (4, 6).

10. Device according to Claim 8, in which the relative axial movement of the winding fabric (T) on the surface of the winding heads (10, 10') is caused by the axial movement of the anchoring plates (4, 6).

11. Device according to Claim 6, in which the diameters of the anchoring plates (4, 6) are adjusted so that the anchoring points P1 are disposed substantially at the same radius as the back of the winding head (104) and so that the anchoring points P2 are disposed substantially at the same radius as the internal radius of the toric ring (R).

12. Device according to Claim 2, in which the support plate (9) comprises a mechanism (8, 8') allowing the radial movement of the winding heads (10, 10') facilitating the axial introduction of the assembly formed by the toric ring (R) and the cylindrical sleeve (C) wound around the latter in the annular housing (L).

13. Method of winding one end (E) of a cylindrical sleeve (C) of axis XX' around a toric ring (R) with an inside diameter substantially equal to that of the cylindrical sleeve (C), so that the end (E) of the said cylindrical sleeve is engaged between the toric ring (R) and the cylindrical sleeve (C) itself in order to make at least one complete turn around the substantially circular radial section of the said toric ring (R), **characterised in that** the winding of the end (E) of the said cylindrical sleeve (C) around the toric ring (R) is caused by the movement of a winding fabric (T) gripping part of the circumference of the assembly formed by the toric ring (R) and cylindrical sleeve (C) surrounding the latter.

14. Method according to Claim 13, comprising the following steps :
- disposing in the open position a device (D) comprising a winding fabric (T) formed by a sleeve fixed by its two ends (P1, P2) to two anchoring plates (4, 6) with different diameters, the said winding fabric (T) sliding freely in the axial direction over the external surface of a concentric set of winding heads (10, 10') having an external profile comprising a back (104) constituting a substantially cylindrical surface XX', a convex front annular surface (102) of axis XX', connected to the previous surface, and a concave annular surface (103) of axis XX' situated at the rear of the convex annular surface (102) and connected to the latter, so that the winding fabric produces S-shaped loops (B) when the said winding fabric (T) substantially follows the radial profile of the surface of the winding heads (10, 10'), by radially lifting the said winding heads (10, 10') by appropriate means (8, 8'),
- introducing a toric ring (R) on one of the ends (E) of the cylindrical sleeve into the annular housing (L) formed by the loop (B) produced by the winding fabric,
- radially lowering the set of winding heads concentrically so that the winding fabric (2) grips the assembly formed by the toric ring (R) and the cylindrical sleeve (C) over more than half of the circumference of the said assembly,
- putting the winding fabric (T) under tension in the axial direction by appropriate means (5, 5'),
- axially moving the set of winding heads (10, 10') in an axial direction (D) directed towards the middle part of the cylindrical sleeve (C) so that the relative movement of the winding fabric (T) with respect to the concave annular surface (103) causes the winding of the end (E) of the cylindrical sleeve around the toric ring (R) so that the end (E) is engaged between the toric ring (R) and the said cylindrical sleeve (C) itself in order to make at least one complete turn around the said toric ring (R),
- releasing the tension on the winding fabric (T) and radially lifting the set of winding heads (10, 10'),
- extracting the cylindrical sleeve (C) wound around the toric ring (R).

15. Method according to Claim 13, in which the toric ring (R) consists of a toric reinforcement bead wire of a pneumatic bead.

16. Method according to Claim 13, in which the cylindrical sleeve (C) consists of the carcass reinforcement of a tyre.

17. Method according to Claim 13, in which an agent is introduced for reducing friction at the interface between the toric ring (R) and the cylindrical sleeve (C) so as to allow the sliding of the cylindrical sleeve (C) around the toric ring (R).

18. Method according to Claim 17, in which the agent for reducing the friction is stearate.

19. Method according to Claim 17, in which the agent for reducing friction consists of a sheath of thermoplastic material previously wound around the toric ring (R).

20. Method according to Claim 17, in which the agent for reducing friction consists of a metallic or textile filament previously wound around the ring (R).

## Patentansprüche

1. Vorrichtung (D) zum Aufwickeln eines Endes (E) einer um die Achse XX' zylindrischen Hülse (C) um einen O-Ring R mit einem Innendurchmesser, der in etwa dem Durchmesser der zylindrischen Hülse (C) entspricht, sodass das Ende (E) der zylindrischen Hülse zwischen dem O-Ring R und der zylindrischen Hülse (C) selbst liegt, um mindestens eine vollständige Umdrehung um den in etwas runden Radialschnitt des O-Rings auszuführen, wobei die Vorrichtung **dadurch gekennzeichnet ist, dass** sie ein zum Wickeln verwendetes Gewebe (T) umfasst, das ebenfalls aus einer Hülse gebildet ist, die in axialer Richtung frei über die äußere Oberfläche einer konzentrischen Einheit von Wickelköpfen (10, 10') gleitet, die ein äußeres Profil aufweisen, das einen Rücken (104), der aus einer um die Achse XX' in etwa zylindrischen Oberfläche besteht, eine um die Achse XX' ringförmige, vorne konvexe Oberfläche, die mit der vorhergehenden Oberfläche verbunden ist, und eine um die Achse XX' ringförmige konkave Oberfläche (103) aufweist, die sich hinter der ringförmigen konvexen Oberfläche (102) befindet und mit dieser so verbunden ist, dass das zum Wickeln verwendete Gewebe (T) S-förmige Schleifen bildet, wenn das zum Wickeln verwendete Gewebe (T) in etwa dem Radialprofil der ringförmigen konvexen Oberfläche (102) und der ringförmigen konkaven Oberfläche (103) der Wickelköpfe (10, 10') folgt.

2. Vorrichtung nach Anspruch 1, wobei eine der S-förmigen Schleifen (B), die von dem zum Aufwickeln verwendeten Gewebe (T) gebildet wird, eine ringförmige Aufnahme (L) bildet, die den O-Ring (R) und das Ende (E) der zylindrischen Hülse (C) aufnehmen soll.

3. Vorrichtung nach Anspruch 2, wobei das zum Aufwickeln verwendete Gewebe (T) in Umfangsrichtung im Wesentlichen elastisch und in der axialen Richtung XX' im Wesentlichen nicht elastisch ist.

4. Vorrichtung nach Anspruch 2, wobei die Wickelköpfe (10, 10') so angeordnet sind, dass die zylindrische Oberfläche, die den Rücken (104) bildet, sich in dem Bereich der Wickelköpfe (10, 10') befindet, der in radialer Richtung am weitesten von der Achse XX' entfernt ist.

5. Vorrichtung nach Anspruch 2, wobei das zum Wickeln verwendete Gewebe (T) die Einheit, die aus dem O-Ring (R) und der zylindrischen Hülse (C) gebildet wird, über zumindest die Hälfte des Umfangs der Einheit umgibt.

6. Vorrichtung nach Anspruch 2, wobei die beiden Enden (P1, P2) der Hülse (C), die aus dem zum Wickeln verwendeten Gewebe (T) gebildet wird, am Rand von zwei kreisförmigen Verankerungsplatten (4, 6) befestigt sind, welche konzentrisch und um die Achse XX' auf beiden Seiten der Wickelköpfe (10, 10') an einer Welle (2) angeordnet sind.

7. Vorrichtung nach Anspruch 6, wobei die Platten zur Verankerung (4, 6) mit einem Mechanismus (5, 5') ausgestattet sind, der es ermöglicht, während des eigentlichen Arbeitsgang des Aufwickelns der zylindrischen Hülse (C) um den O-Ring (R) eine konstante Spannung des zum Aufwickeln verwendeten Gewebes (T) in axialer Richtung aufrechtzuerhalten.

8. Vorrichtung nach Anspruch 2, wobei das Aufwickeln der zylindrischen Hülse (C) um den O-Ring (R) durch die relative Bewegung des zum Aufwickeln verwendeten Gewebes (C) bewirkt wird, das in axialer Richtung an der Oberfläche der Wickelköpfe (10, 10') umläuft.

9. Vorrichtung nach Anspruch 8, wobei die relative axiale Verschiebung des zum Wickeln verwendeten Gewebes (T) an der Oberfläche der Wickelköpfe (10, 10') durch die axiale Verschiebung der Wickelköpfe zwischen den Verankerungsplatten (4, 6) hervorgerufen wird.

10. Vorrichtung nach Anspruch 8, wobei die relative axiale Verschiebung des zum Aufwickeln verwenden Gewebes (T) an der Oberfläche der Wickelköpfe (10, 10') durch die axiale Verschiebung der Verankerungsplatten (4, 6) hervorgerufen wird.

11. Vorrichtung nach Anspruch 6, wobei die Durchmesser der Verankerungsplatten (4, 6) so angepasst sind, dass sich die Verankerungspunkte P 1 in etwa auf dem gleichen Radius wie der Rücken des Aufwickelkopfes (104) und die Verankerungspunkte P2 in etwa auf dem gleichen Radius wie der Innenradius des O-Rings (R) befinden.

12. Vorrichtung nach Anspruch 2, wobei die Trägerplatte (9) einen Mechanismus (8, 8') aufweist, der die radiale Verschiebung der Wickelköpfe (10, 10') ermöglicht, um das Einbringen der Einheit, die aus dem O-Ring (R) und der um diesen gewickelten zylindrischen Hülse (C) gebildet wird, in die ringförmige Aufnahme (L) in axialer Richtung zu erleichtern.

13. Verfahren zum Aufwickeln eines Endes (E) einer um die Achse XX' zylindrischen Hülse (C) um einen O-Ring (R) mit einem Innendurchmesser, der in etwa dem Durchmesser der zylindrischen Hülse (C) entspricht, sodass das Ende (E) der zylindrischen Hülse zwischen dem O-Ring (R) und der zylindrischen Hülse (C) selbst liegt, sodass mindestens eine vollständige Drehung um den in etwa runden Radialschnitt des O-Rings (R) erfolgt, **dadurch gekennzeichnet, dass** das Aufwickeln des Endes (E) der zylindrischen Hülse (C) um den O-Ring (R) durch die Bewegung eines zum Aufwickeln verwendeten Gewebes (T) hervorgerufen wird, das einen Teil des Umfangs der Einheit, die aus dem O-Ring (R) und der um diesen aufgewickelten zylindrischen Hülse (C) gebildet wird, einschließt.

14. Verfahren nach Anspruch 13, das die folgenden Schritte umfasst:
- Anordnen einer Vorrichtung (D) in offener Position, die ein zum Wickeln verwendetes Gewebe (T) umfasst, das aus einer Hülse gebildet wird, die an ihren beiden Enden (P1, P2) an zwei Verankerungsplatten mit unterschiedlichen Durchmessern (4, 6) befestigt ist, wobei das zum Aufwickeln verwendete Gewebe (T) in axialer Richtung frei über die äußere Oberfläche einer konzentrischen Einheit von Wickelköpfen (10, 10') gleitet, die ein äußeres Profil aufweisen, das einen Rücken (4), der aus einer um die Achse XX' in etwa zylindrischen Oberfläche besteht, eine um die Achse XX' ringförmige, vorne konvexe Oberfläche (102), die mit der vorhergehenden Oberfläche verbunden ist, und eine um die Achse XX' ringförmige, konkave Oberfläche (103) aufweist, die sich hinter der ringförmigen konvexen Oberfläche (102) befindet und mit dieser verbunden ist, sodass das zum Aufwickeln verwendete Gewebe S-förmige Schleifen (B) bildet, wenn das zum Aufwickeln verwendete Gewebe (T) in etwa dem radialen Profil der Oberfläche der Wickelköpfe (10, 10') folgt, indem die Wickelköpfe mit geeigneten Mitteln (8, 8') in radialer Richtung angehoben werden,
- Einbringen eines O-Rings (R) und eines Endes (E) der zylindrischen Hülse in die ringförmige Aufnahme (L), die aus der Schleife (B) gebildet ist, die von dem zum Aufwickeln verwendeten Gewebe realisiert wird,
- Absenken der Einheit von Wickelköpfen in radialer Richtung konzentrisch, sodass das zum Aufwickeln verwendete Gewebe (T) die Einheit, die aus dem O-Ring (R) und der zylindrischen Hülse (C) gebildet wird, über mindestens der Hälfte des Umfangs der Einheit einschließt,
- Unterspannungsetzen des zum Aufwickeln verwendeten Gewebes (T) in axialer Richtung mithilfe von geeigneten Mitteln (5, 5'),
- Verschieben der Einheit von Wickelköpfen (10, 10') in einer axialen Richtung D1, die in Richtung des Medianteils der zylindrischen Hülse (C) gerichtet ist, in axialer Richtung, sodass die relative Bewegung des zum Wickeln verwendeten Gewebes (T) in Bezug auf die konkave ringförmige Oberfläche (103) das Aufwickeln des Endes (E) der ringförmigen Hülse um den O-Ring (R) bewirkt, sodass das Ende (E) zwischen dem O-Ring (R) und der zylindrischen Hülse (C) selbst liegt, sodass mindestens eine vollständige Umdrehung um den O-Ring (R) erfolgt,
- Lösen der Spannung des zum Aufwickeln verwendeten Gewebes (T) und Heben der Einheit von Wickelköpfen (10, 10') in radialer Richtung,
- Herausnehmen der zylindrischen Hülse (C), die um den O-Ring (R) gewickelt ist.

15. Verfahren nach Anspruch 13, wobei der O-Ring (R) aus einem torischen Wulstkern zur Verstärkung eines Reifenwulstes besteht.

16. Verfahren nach Anspruch 15, wobei die zylindrische Hülse (C) aus der Karkassenbewehrung eines Luftreifens besteht.

17. Verfahren nach Anspruch 13, wobei ein Mittel eingebracht wird, das die Reibung an der Grenzfläche zwischen dem O-Ring (R) und der zylindrischen Hülse (C) so vermindert, dass die zylindrische Hülse (C) um den O-Ring (R) gleiten kann.

18. Verfahren nach Anspruch 17, wobei das Mittel, das die Reibung vermindern kann, Stearat ist.

19. Verfahren nach Anspruch 17, wobei das Mittel, das die Reibung vermindern kann, aus einer Hülse aus einem thermoplastischen Material besteht, die vorab um den O-Ring (R) gewickelt wurde.

20. Verfahren nach Anspruch 17, wobei das Mittel, das die Reibung vermindern kann, aus einem Metallfilament oder Textilfilament besteht, das vorab um den Ring (R) gewickelt wurde.
